# EUROPÄISCHE PATENTANMELDUNG

(11) **EP 2 796 776 A1**
(43) Veröffentlichungstag der Anmeldung: **29.10.2014**
(21) Anmeldenummer: 14165684.3
(22) Anmeldetag: 23.04.2014
(51) Int. Cl.: F21V 5/00, F21V 5/02, F21S 8/06, F21Y 105/00

(54) **Leuchte für diffus abstrahlende, flächige Leuchtmittel, insbesondere für OLED, sowie optisches System und Leuchtenabdeckung hierfür**

(30) Priorität: 23.04.2013 DE 102013207361
(71) Anmelder: Trilux GmbH & Co. KG, 59759 Arnsberg (DE)
(72) Erfinder: Ihle, Dave, 59469 Ense (DE); Ludwig, Sebastian, 50735 Köln (DE); Friedrich, Thomas, 59469 Ense (DE)
(74) Vertreter: Lippert, Stachow & Partner

(57) **Zusammenfassung**

Die Erfindung betrifft eine Leuchte (10) für diffus abstrahlende, flächige Leuchtmittel, insbesondere für OLED (30) mit einem Leuchtengehäuse (12) und einem optischen System zur Lichtlenkung. Erfindungsgemäß ist eine flächige Leuchtenabdeckung (14) aus lichtdurchlässigem Material vorgesehen. Die Leuchtenabdeckung (14) ist als Bestandteil des optischen Systems abstrahlseitig mindestens eine Prismenstruktur (20; 40; 50; 60; 70) zur Lichtlenkung gemäß der für die Leuchte gewünschten Abstrahlcharakteristik. Es kann insbesondere eine Entblendung bei flachen Abstrahlwinkeln erzielt werden. Die Erfindung betrifft ebenfalls ein entsprechendes optisches System und eine speziell hierfür gestaltete Leuchtenabdeckung (14).

## Beschreibung

Die vorliegende Erfindung betrifft eine Leuchte für ein oder mehrere diffus abstrahlende Leuchtmittel mit flächiger Gestalt, insbesondere für OLED, sowie ein optisches System und eine Leuchtenabdeckung für eine derartige Leuchte.

OLEDs befinden sich derzeit noch am Anfang der Entwicklung. Eine OLED weist eine flächige Gestalt auf mit einer oder mehreren leuchtenden Flächen. Die derzeit verfügbare Größe der Flächen beträgt einige 10 cm² bis einige 100 cm². Sie werden bereits zur Hinterleuchtung von kleinen und mittelgroßen Displays, etwa in Smartphones oder Haushaltsgeräten eingesetzt. Es ist jedoch auch bereits bekannt, OLEDs für Beleuchtungszwecke in Leuchten einzusetzen, u. a. in Deckenleuchten und Schreibtischleuchten. Eine derartige Leuchte umfasst typischerweise ein Leuchtengehäuse mit einer Lichtaustrittsöffnung sowie eine oder mehrere flächig abstrahlende OLEDs. Die OLED wird in der Regel austauschbar im oder am Leuchtengehäuse angeordnet.

Bekanntermaßen ist die Lichtemission herkömmlicher OLEDs mehr oder weniger lambertisch, d.h. ungerichtet bzw. quasi ideal diffus. Bei der Anwendung von OLED bei Leuchten, beispielsweise für Arbeits- oder Wohnbereiche, ist es erwünscht, dass die Leuchte neben oder anstatt der diffusen Lambert-Strahlung auch eine gerichtete oder fokussierte Strahlung abgeben kann.

Aus diesem Grund wurde bereits vorgeschlagen, ein optisches System zur Lichtlenkung bei der Herstellung in die OLED selbst zu integrieren. Eine entsprechende OLED ist beispielsweise aus der internationalen Patentanmeldung WO 2012/ 084840 bekannt. Bei dieser OLED ist eine optisch wirksame Struktur, welche durch Lichtbrechung eine gerichtete Abstrahlung der Licht-emission bewirkt, in das Decksubstrat und/oder in das Trägersubstrat der OLED integriert, beispielsweise in der Form von prismenartigen Mikrostrukturen an der inneren oder äußeren Substratoberfläche. Der Vorteil dieser Lösung besteht darin, dass die OLED inhärent bereits mit einer gerichteten Abstrahlung versehen wird. Nachteilig ist hingegen, dass die Herstellungskosten der OLED erhöht werden und verhältnismäßig begrenzte Möglichkeiten zur Lichtlenkung vorgegeben sind.

Bei der zu erwartenden Steigerung der Leuchtdichte bzw. Leucht-intensität von OLEDs wird es zukünftig insbesondere in der Beleuchtungstechnik erforderlich sein, hiermit einhergehende Störeffekte, wie bspw. eine Blendung des Nutzers, zu verhindern.

In der europäischen Patentanmeldung EP 2410235 wird zur wahlweise kombinierbaren diffusen und gerichteten Beleuchtung eine Leuchte mit OLED offenbart, die dazu eingerichtet ist, auf einfache Weise Intensität und Richtung des abgestrahlten Lichts einstellbar zu verändern. Dies wird erzielt durch aktive lichtmodulierende Zusatzelemente. Diese umfassen gemäß EP2410235 ein elektrochromes Glas oder ein LC-Glas zur Intensitätseinstellung und ein Mikrospiegelarray zur Lichtlenkung. Ein derartiges optisches System ermöglicht eine vielfältig wählbare, variable Einstellung der Charakteristik, ist jedoch relativ kostenintensiv.

In Anbetracht der vorliegenden Erläuterungen zum Stand der Technik besteht eine Aufgabe der vorliegenden Erfindung darin, eine Leuchte für diffus emittierende, flächige Leuchtmittel vorzuschlagen, welche auf einfache Weise eine gewünschte Abstrahlcharakteristik erzielt. Auch ein entsprechendes optisches System und eine Leuchtenabdeckung zur Lösung dieser Aufgabe werden vorgeschlagen.

Bei einer gattungsgemäßen Leuchte wird diese Aufgabe erfindungsgemäß dadurch gelöst, dass eine flächige Leuchtenabdeckung aus lichtdurchlässigem Material als wirkender Bestandteil des lichtlenkenden optischen Systems vorgesehen ist und dass jede Prismenstruktur als Makroprisma mit einer Grundfläche ausgeführt ist, deren Flächenmaß parallel zur Hauptebene mindestens 10%, vorzugsweise mindestens 25% des Flächenmaßes eines zugehörigen flächigen Leuchtmittels (30) beträgt.

Die Leuchtenabdeckung wirkt somit als separates Bauteil vor dem Leuchtmittel und ist der Lichtaustrittsöffnung zugeordnet. Die erfindungsgemäße Leuchtenabdeckung weist insbesondere als optisch wirkender Bestandteil des optischen Systems abstrahlseitig mindestens eine Prismenstruktur zur Lichtlenkung gemäß einer für die Leuchte gewünschten Abstrahlcharakteristik auf. Die Lichtlenkung erfolgt durch die Prismenwirkung hierbei naturgemäß durch Lichtumlenkung und/oder Lichtbrechung und kann somit durch die wählbare Geometrie der Prismenstruktur entsprechend der gewünschten Richtcharakteristik unabhängig vom verwendeten Leuchtmittel vorgegeben werden. Hierfür geeignete lichtdurchlässige Materialien sind aus der Optik bekannt.

Die entsprechend gestaltete lichtdurchlässige Leuchtenabdeckung kann insbesondere zur Entblendung bei flachen Abstrahlwinkeln bezüglich der Hauptebene des flächigen Leuchtmittels genutzt werden. So kann auf herkömmliche Raster zur Entblendung verzichtet werden und zudem eine ansprechend schlanke Bauform der Leuchte erreicht werden. Zugleich kann durch die Leuchtenabdeckung auch eine Fokussierung des Lichts auf den gewünschten Raumbereich erfolgen, so dass entsprechende Reflektoren entfallen.

Im Gegensatz zum einleitend beschriebenen Stand der Technik schlägt die Erfindung somit vor, optische Elemente zur Lichtlenkung, nicht in die als Verbrauchsteil austauschbare OLED selbst, sondern in eine flächige Leuchtenabdeckung der Leuchte zu integrieren. Eine Leuchtenabdeckung kann beispielsweise zur Steigerung der Ästhetik oder zum verbesserten Schutz der OLED vor Fremdeinwirkung als Bestandteil der Leuchte bereits vorgesehen sein, so dass nur geringe Zusatzkosten anfallen. Durch die erfindungsgemäße Lösung wird zudem im Vergleich zu den typischen optischen Systemen herkömmlicher Leuchten mit rückseitigen Reflektoren und Rasterblenden eine deutlich flachere Gestaltung des Leuchtengehäuses und somit eine der ansprechenden Form der flächigen OLEDs ästhetisch besser angepasste Bauform ermöglicht. Zudem bieten die Dimensionen einer Leuchtenabdeckung naturgemäß größere Gestaltungsmöglichkeiten hinsichtlich der Geometrie bzw. der Abmessungen einer erfindungsgemäßen Prismenstruktur als etwa in die OLED integrierte Mikrostrukturen geringer Größe.

Optisch wirkende Strukturen in Leuchtenabdeckungen zu integrieren ist bereits bekannt, etwa bei Leuchten für Leuchtstofflampen oder Punktquellen. Hierbei wird im Gegensatz zur vorliegenden Erfindung jedoch nicht die Lichtlenkung bzw. die Erzielung einer Richtcharakteristik angestrebt, sondern das Streuen bzw. die Diffusion des Lichts aus linien- oder punktförmigen Quellen.

In einer zweckmäßigen Ausführungsform ist vorgesehen, dass die Prismenstruktur pyramidenförmig ausgeführt ist. Insbesondere bei Deckenleuchten ist es zur Erzielung einer hohen Lichtausbeute senkrecht zur Hauptebene der flächigen Leuchtmittel vorteilhaft, eine pyramidenstumpfförmige Gestaltung der Prismenstrukturen vorzusehen. Hierbei kann insbesondere mit einer mittleren Parallelfläche, welche parallel zur Hauptebene verläuft, eine hohe Ausbeute senkrecht zum flächigen Leuchtmittel erhalten und zugleich eine Blendung bei flachen Winkeln vermieden werden.

In einer alternativen Ausführungsform ist es zweckmäßig, die Prismenstruktur kegelförmig auszuführen. Auch hier kann durch eine kegelstumpfförmige Gestaltung mit einer mittleren Parallelfläche eine hohe Lichtausbeute senkrecht zur Hauptebene erzielt werden.

Als pyramidenförmige Prismenstruktur ist insbesondere die Form gerader Pyramiden mit einem regelmäßigen Vieleck, insbesondere einem Quadrat, als Grundfläche zweckmäßig. Analog ist bei Verwendung kegelförmiger Prismenstrukturen die Form eines geraden Kreiskegels zweckmäßig. Auch eine Kombination aus pyramidenförmigen und kegelförmigen Prismenstrukturen mit geeigneter Verteilung innerhalb der Leuchtenabdeckung ist möglich.

Um eine möglichst effiziente Lichtlenkung und eine möglichst starke Verringerung der Diffusion zu erzielen, sind verhältnismäßig große Prismenstrukturen vorteilhaft. Insbesondere ist es zweckmäßig, die Prismenstrukturen mit einer Grundfläche zu gestalten, deren Flächenmaß parallel zur Hauptebene mindestens 10%, vorzugsweise mindestens 25%, des wirksamen Flächenmaßes des zugehörigen Leuchtmittels beträgt. Eine derartige Prismenstruktur wird im Gegensatz zu den bekannten Mikrostrukturen nachfolgend als Makroprisma bezeichnet. Als zugehörig wird hierbei das Leuchtmittel verstanden, in dessen Abstrahlung die Prismenstruktur angeordnet ist. In einer bevorzugten Ausführung weist jedes Makroprisma eine Grundfläche parallel zur Hauptebene von mindestens 10 cm² auf.

Herstellungstechnisch einfach kann eine erfindungsgemäße Leuchtenabdeckung mit einer Mehrzahl von Prismenstrukturen einstückig bzw. einteilig hergestellt sein. Unter Mehrzahl wird hierbei insbesondere eine ein- bis zweistellige Anzahl verstanden, nicht jedoch eine Vielzahl von hunderten bzw. tausenden Mikrostrukturen. Es liegt jedoch auch im Rahmen der Erfindung, die Leuchtenabdeckung aus einer Mehrzahl einzeln hergestellter Prismenelemente, welche jeweils eine Prismenstruktur aufweisen, zusammenzusetzen, z.B. durch Anbringen auf einer gemeinsamen transparenten Trägerplatte. Diese Variante ermöglicht eine Reduzierung der erforderlichen Teilezahl, indem ein modulares, kachelartiges Prismenelement jeweils für eine Vielzahl Leuchten unterschiedlicher Größe verwendbar ist.

Unabhängig von der gewählten Formgebung ist die Leuchtenabdeckung zweckmäßig aus transparentem, aber zumindest aus überwiegend lichtdurchlässigem Material hergestellt. Der Begriff "lichtdurchlässig" bezeichnet vorliegend sowohl vollständig transparente Materialien wie etwa Glas oder auch teilweise lichtdurchlässige Materialien, etwa Milchglas oder opale Kunststoffe. Zur geeigneten Lichtlenkung ist jedoch ein Transmissionsgrad von >50%, vorzugsweise >75% zweckmäßig. Geeignet sind beispielsweise Kunststoffe wie PMMA oder entsprechend bearbeitetes Glas.

In einer materialsparenden, kostengünstigen und besonders ästhetischen Gestaltung werden die Prismenstrukturen in der Leuchtenabdeckung derart dimensioniert, dass die gewünschte Richtcharakteristik vollständig und allein durch die Leuchtenabdeckung erzielt wird. Entsprechend besteht das optische System der Leuchte vorzugsweise ausschließlich aus der Leuchtenabdeckung mit den Prismenstrukturen. Weitere optisch wirkende Bauelemente zur Lichtlenkung sind bei entsprechender Gestaltung nicht erforderlich.

Die vorliegende Erfindung eignet sich insbesondere zur Verwendung in Innenraumleuchten, beispielsweise in Deckenleuchten. Sie betrifft somit auch eine Innenraumleuchte mit einem flachen, kastenförmigen Gehäuse, beispielsweise mit rechteckigem Grundriss, in welcher eine großflächige OLED als Leuchtmittel vorgesehen ist. Großflächig bedeutet hierbei insbesondere eine Grundfläche von mindestens 100 cm². Erfindungsgemäß ist eine Leuchtenabdeckung mit optisch wirksamen Prismenstrukturen zur Lichtlenkung in oder an der Innenraumleuchte angebracht.

Die Erfindung betrifft auch ein optisches System für eine gattungsgemäße Leuchte mit mindestens einem diffus abstrahlenden, flächigen Leuchtmittel, d.h. solche mit sich auf einer Fläche ausdehnender Formgebung und entsprechend über die Fläche verteilter Abstrahlung, insbesondere mit einer oder mehreren OLED.

Das vorgeschlagene optische System zeichnet sich dadurch aus, dass es zur Erzielung einer gewünschten Richtcharakteristik, insbesondere zur Vermeidung von Blendung bei flachen Abstrahlwinkeln, eine Leuchtenabdeckung mit einer oder mehreren Prismenstrukturen umfasst, welche lichtlenkend wirken und abstrahlseitig an der Leuchtenabdeckung vorgesehen sind.

Schließlich betrifft die Erfindung die Leuchtenabdeckung, welche speziell als wesentlicher, vorzugsweise ausschließlicher Bestandteil des optischen Systems der Leuchte gestaltet ist.

In einer abstrahierten Ausführungsform betrifft die Erfindung eine Leuchte für diffus abstrahlende, flächige Leuchtmittel, insbesondere für OLED, umfassend ein Leuchtengehäuse mit einer Lichtaustrittsöffnung; mindestens ein flächig abstrahlendes Leuchtmittel, insbesondere eine OLED, welches eine flächige Gestalt mit einer Hauptebene aufweist und im oder am Gehäuse angeordnet ist; und ein optisches System zur Lichtlenkung umfasst. Unter Zugrundelegung der zuvor diskutierten Nachteile am eingangs genannten am Stand der Technik schlägt die Erfindung bei dieser abstrahierten Lösung vor, **dass** eine flächige Leuchtenabdeckung aus lichtdurchlässigem Material vorgesehen ist und als Bestandteil des optischen Systems abstrahlseitig mindestens eine Prismenstruktur zur Lichtlenkung gemäß einer gewünschten Abstrahlcharakteristik umfasst.

Weitere Vorteile und Einzelheiten der Erfindung werden nun anhand der Zeichnungen beispielhaft näher erläutert. Es zeigen:
- FIG.1A-1B:: Ausführungsbeispiele einer erfindungsgemäßen Leuchte, eine Hängeleuchte in perspektivischer Ansicht der Vorderseite (FIG.1A) bzw. der Rückseite (FIG.1B);
- FIG.2A-2C:: eine transparente Leuchtenabdeckung für eine Leuchte gemäß FIG.1A-1B, in Draufsicht der Frontseite (FIG.2A), in Seitenansicht der Breitseite (FIG.2B) und in Seitenansicht der Längsseite (FIG.2C);
- FIG.3:: einen schematische Querschnittsdarstellung einer Prismenstruktur in einer erfindungsgemäßen Leuchtenabdeckung zur Veranschaulichung der optischen Wirkung;
- FIG.4A-4B:: eine erste Ausführung eines Prismenelements, jeweils im Querschnitt und in perspektivischer Ansicht;
- FIG.5A-5B:: eine zweite Ausführung eines Prismenelements, jeweils im Querschnitt und in perspektivischer Ansicht;
- FIG.6A-6B:: eine dritte Ausführung eines Prismenelements, jeweils im Querschnitt und in perspektivischer Ansicht;
- FIG. 7A-7B:: eine vierte Ausführung eines Prismenelements, jeweils im Querschnitt und in perspektivischer Ansicht.

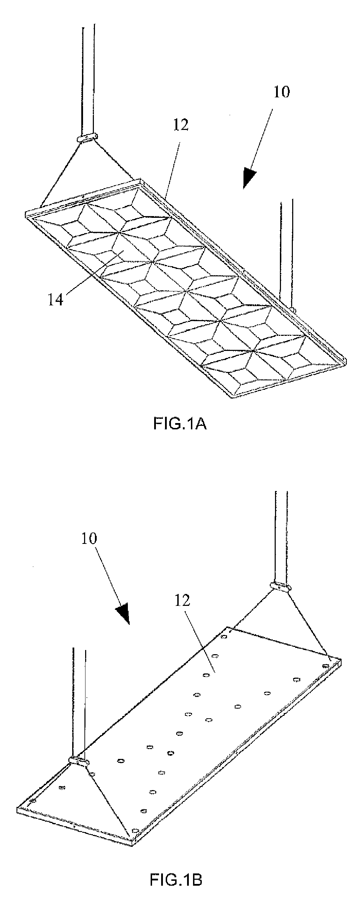

In FIG.1A-1B ist eine Leuchte 10 mit einem Leuchtengehäuse 12 und einer transparenten Leuchtenabdeckung 14 gezeigt. Das Leuchtengehäuse 12 hat eine besonders flache Bauform mit rechteckigem Grundriss und einer sehr geringen Gesamttiefe, insbesondere <20% der Breite. Die Leuchte 10 ist als Hängeleuchte gezeigt und kann mit gleicher Bauform, jedoch ohne die gezeigten Befestigungsdrähte, auch als Deckenanbauleuchte verwendet werden. Das schlanke Leuchtengehäuse 12 besteht im Wesentlichen aus der in FIG.1B ersichtlichen rückseitigen Grundplatte und einer profilartigen, abnehmbaren Umrandung aus vier Randleisten. Die gezeigte Leuchte 10 hat lediglich eine Lichtaustrittsöffnung an der Front- bzw. Unterseite. Ergänzend, kann auch oberseitig eine Lichtaustrittsöffnung zur indirekten Deckenbeleuchtung vorgesehen werden.

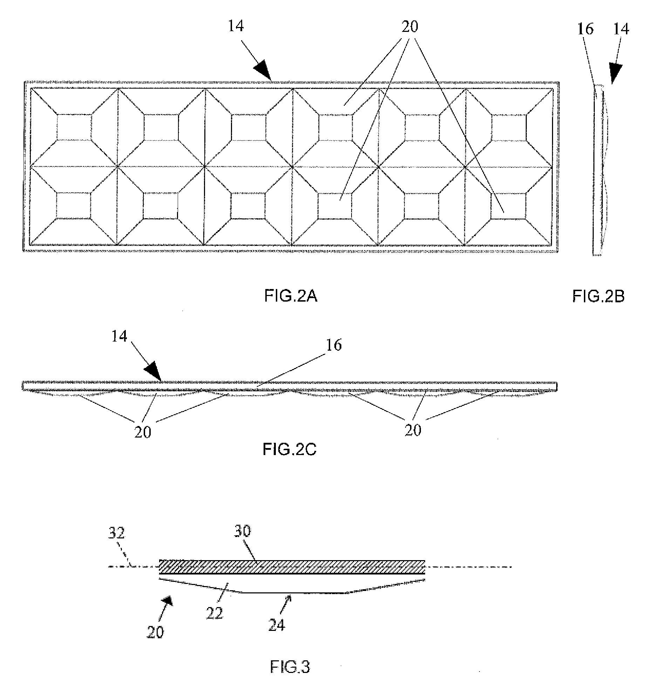

Die Lichtaustrittsöffnung wird in der Ausführung nach FIG.1A-1B vollständig durch die transparente Leuchtenabdeckung 14 abgedeckt. Alternativ können Teilbereiche auch unverdeckt bleiben. Durch die Leuchtenabdeckung 14 wird zusammen mit den weiteren Bestandteilen des Leuchtengehäuses 12 eine in FIG.1A-1B nicht ersichtliche, innen angebrachte großflächige OLED 30 (siehe FIG.3) vor unerwünschter mechanischer Einwirkung von außen geschützt. Diese ist insbesondere bei OLED 30 in Form einer flexiblen, sehr dünnen Folie vorteilhaft. Bei größeren Leuchten 10 können auch mehrere kleinere OLED 30 kachelartig vorgesehen werden. Zum nachträglichen Austausch der OLED sind die Randleisten lösbar verschraubt, beispielsweise durch Madenschrauben.

In FIG.2A-2C ist der Aufbau der Leuchtenabdeckung 14 näher gezeigt. Diese umfasst eine rechteckige Grundplatte 16 auf welcher an der Außenseite bzw. abstrahlseitig eine Mehrzahl, im gezeigten Beispiel zwölf, Prismenstrukturen 20 vorgesehen sind. Die Prismenstrukturen 20 können einteilig mit der Grundplatte 16 hergestellt werden. Bei Verwendung von Glas als Material für die Leuchtenabdeckung 14 sind die Prismenstrukturen 20 durch einen geeigneten Schliff eingearbeitet. Bei Verwendung von Kunststoff, etwa PMMA, können die Prismenstrukturen 20 einstückig mit der Grundplatte 16 durch geeignete Formgebung beim Gießen erzeugt werden. In FIG.2A-2C haben die Prismenstrukturen 20 eine näherungsweise quadratische Grundfläche, identische Geometrie und grenzen mit ihren Seitenflächen unmittelbar aneinander. Auch andere Formen, etwa dreieckige Grundflächen und/oder Zwischenbereiche ohne optisch wirkende Prismen, liegen im Rahmen der Erfindung. Die Grundfläche einer Prismenstruktur 20 soll jedoch ein gewisses Mindestmaß, insbesondere im Vergleich zur zugehörigen OLED 30 (FIG.3) aufweisen. Zweckmäßig ist ein Flächenmaß von mindestens 10%, vorzugsweise mindestens 25% des Flächenmaßes der OLED 30. In der Praxis sind somit Flächenmaße von mindestens 10cm², etwa 5x5cm oder 10x10cm zweckmäßig.

FIG.3 veranschaulicht schematisch die optische Wirkung einer Prismenstruktur 20 in der Form eines Pyramidenstumpfs 22 gemäß FIG.2A-2C. Ferner zeigt FIG.3 schematisch die zugehörige OLED 30 und deren Hauptebene 32, wobei die Dicke der OLED 30 zur besseren Darstellung im Vergleich zur Prismenstruktur 20 übertrieben ist. Die Prismenstruktur 20 hat vorzugsweise eine deutlich größere Gesamttiefe bzw. Gesamtdicke als die OLED 30. Die Prismenstruktur 20 hat eine mittlere Parallelfläche 24, welche keine Lichtlenkung bewirkt. An den schräg angestellten Seitenflächen des Pyramidenstumpfes 22 erfolgt hingegen eine Lichtlenkung der diffusen Abstrahlung durch Brechung und Reflexion, so dass Lichtstrahlen in den Bereich senkrecht unterhalb der Parallelfläche 24 umgelenkt werden. Somit erzeugt die Prismenstruktur 20 eine Lichtlenkung zur Fokussierung des Lichts in den Raumbereich unmittelbar unterhalb der Leuchte 10 und reduziert blendende Abstrahlung in Richtung flacher Winkel bezüglich der Hauptebene 32. In FIG.3 ist rein beispielhaft ein entsprechender Strahlengang durch Pfeile schematisch veranschaulicht.

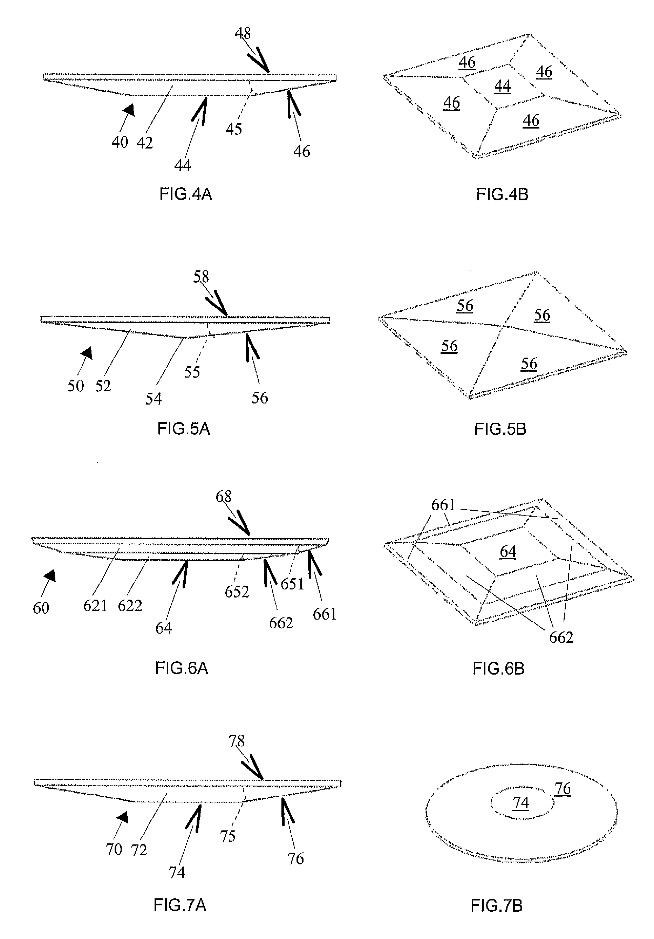

FIG.4A-4B bis FIG.7A-7B zeigen unterschiedliche Gestaltungsmöglichkeiten von einzelnen Prismenelementen 40; 50; 60; 70 aus welchen, alternativ zur einer einteiligen Herstellung der Leuchtenabdeckung 14, eine analog wirkende Leuchtenabdeckung beliebiger Größe kachelartig aus Einzelteilen zusammengesetzt werden kann.

FIG.4A-4B zeigt ein Prismenelement 40, das pyramidenförmig in der Form eines Pyramidenstumpfs 42 ausgeführt ist. Die mittlere Parallelfläche 44 hat keine maßgebliche optische Wirkung. Die Seitenflächen 46 wirken prismatisch und sind mit einem geeigneten Neigungswinkel 45 gegenüber der Grundfläche 48 angestellt. Zweckmäßig sind je nach gewünschter Richtcharakteristik bei Innenraumleuchten für direkte Beleuchtung Neigungswinkel 45 im Bereich von 10°-45°, insbesondere 30°-40°. Die Herstellung modular verwendbarer einzelner Prismenelemente 40 kann wie oben erläutert erfolgen.

Nachfolgend werden zur Vermeidung von Wiederholungen lediglich die wesentlichen Unterschiede der weiteren Beispiele nach FIG.5A-5B bis FIG.7A-7B beschrieben, ansonsten entsprechen die Merkmale der Prismenelemente 50, 60, 70 der vorstehenden Beschreibung.

FIG.5A-5B zeigt ein Prismenelement 50, das bis zur Spitze 54 pyramidenförmig ohne Parallelfläche ausgeführt ist und somit eine stärkere Lenkwirkung erzielen kann.

FIG.6A-6B zeigt ein Doppel-Prismenelement 60 mit einem ersten Pyramidenstumpf 621 und einem zweiten Pyramidenstumpf 622 sowie einer mittigen Parallelfläche 64. Somit können zwei unterschiedliche Neigungswinkel 651, 652 vorgesehen werden zur spezifischeren Gestaltung der Richt- bzw. Abstrahlcharakteristik. Der erste Neigungswinkel 651, zwischen den Seitenflächen 661 des ersten Pyramidenstumpfs 621 und der Grundfläche 68 kann z.B. deutlich größer als der zweite Neigungswinkel 652, zwischen den zweiten Seitenflächen 662 und der Grundfläche 68 gewählt werden, um eine verbesserte Entblendung zu erzielen. Die Ausführung nach FIG.6A-6B eignet sich somit besonders für OLED 30 mit hoher Lichtleistung.

FIG.7A-7B zeigt ein Prismenelement 70 in Form eines Kegelstumpfes 70 eines Kreiskegels. Somit weist die konische Mantelfläche 76 um die Parallelfläche 74 keine Kanten auf, wodurch die Richtungsabhängigkeit der Lichtlenkung bezüglich der Hauptachsen der Leuchte 10 reduziert werden kann.

Ein besonders hervorzuhebender Vorteil der hiermit vorgeschlagenen Verwendung von Makroprismen 20; 40; 50; 60; 70 liegt darin, dass das optische System zur Lichtlenkung für flächig strahlende Leuchtmittel 30 vollständig, kostengünstig und ästhetisch ansprechend in die Leuchtenabdeckung integriert werden kann.

Abschließend bleibt anzumerken, dass Makroprismen 20; 40; 50; 60; 70 unterschiedlichster Geometrien, z.B. nach FIG.4A-4B bis FIG.7A-7B, sowohl für einzelne Prismenelemente, als auch bei einer einteilig hergestellten Leuchtenabdeckung 14 nach FIG.2A-2C verwendbar sind und im Wesentlichen von der gewünschten Richtcharakteristik abhängen.

### Bezugszeichenliste

FIG. 1A-1B
   - 10: Leuchte
   - 12: Leuchtengehäuse
   - 14: Leuchtenabdeckung
FIG. 2A-2C
   - 14: Leuchtenabdeckung
   - 16: Grundplatte
   - 20: Prismenstruktur
FIG. 3
   - 20: Prismenstruktur
   - 22: Pyramidenstumpf
   - 24: Parallelfläche
   - 30: OLED
   - 32: Hauptebene
FIG. 4A-4B
   - 40: Prismenelement
   - 42: Pyramidenstumpf
   - 44: Parallelfläche
   - 45: Neigungswinkel
   - 46: Seitenfläche
   - 48: Grundfläche
FIG. 5A-5B
   - 50: Prismenelement
   - 52: Pyramide
   - 54: Spitze
   - 55: Neigungswinkel
   - 56: Seitenfläche
   - 58: Grundfläche
FIG. 6A-6B
   - 60: Doppel-Prismenelement
   - 621: erster Pyramidenstumpf
   - 622: zweiter Pyramidenstumpf
   - 64: Parallelfläche
   - 651: erster Neigungswinkel
   - 652: zweiter Neigungswinkel
   - 661: erste Seitenfläche
   - 662: zweite Seitenfläche
   - 68: Grundfläche
FIG. 7A-7B
   - 70: Prismenelement
   - 72: Kegelstumpf
   - 74: Parallelfläche
   - 75: Neigungswinkel
   - 76: Mantelfläche
   - 78: Grundfläche

## Patentansprüche

1. Leuchte (10) für diffus abstrahlende, flächige Leuchtmittel, insbesondere für OLED, umfassend ein Leuchtengehäuse (12) mit einer Lichtaustrittsöffnung; mindestens ein flächig abstrahlendes Leuchtmittel (30), insbesondere eine OLED, welches eine flächige Gestalt mit einer Hauptebene (32) aufweist und im oder am Gehäuse angeordnet ist; und ein optisches System zur Lichtlenkung;
**dadurch gekennzeichnet, dass** eine flächige Leuchtenabdeckung (14) aus lichtdurchlässigem Material vorgesehen ist und als Bestandteil des optischen Systems abstrahlseitig mindestens eine Prismenstruktur (20; 40; 50; 60; 70) zur Lichtlenkung gemäß einer gewünschten Abstrahlcharakteristik umfasst, und dass jede Prismenstruktur (20; 40; 50; 60; 70) als Makroprisma ausgeführt ist, mit einer Grundfläche (48; 58; 68; 78), deren Flächenmaß parallel zur Hauptebene (32) mindestens 10%, vorzugsweise mindestens 25% des Flächenmaßes eines zugehörigen flächigen Leuchtmittels (30) beträgt.

2. Leuchte nach Anspruch 1, **dadurch gekennzeichnet, dass** die Prismenstruktur (20; 40; 50; 60) pyramidenförmig ausgeführt ist, insbesondere pyramidenstumpfförmig mit einer mittleren Parallelfläche (4; 64) parallel zur Hauptebene.

3. Leuchte nach Anspruch 1, **dadurch gekennzeichnet, dass** die Prismenstruktur (70) kegelförmig ausgeführt ist, insbesondere kegelstumpfförmig mit einer mittleren Parallelfläche (74) parallel zur Hauptebene.

4. Leuchte nach einem der Ansprüche 1 bis 4, insbesondere nach Anspruch 4, **dadurch gekennzeichnet,** d ass die jede Prismenstruktur (20; 40; 50; 60; 70) eine Grundfläche (48; 58; 68; 78) parallel zur Hauptebene von mindestens 10cm² aufweist.

5. Leuchte nach einem der Ansprüche 1 bis 5, **dadurch gekennzeichnet, dass** die Leuchtenabdeckung (14) mit einer Mehrzahl von Prismenstrukturen (20) einteilig hergestellt ist.

6. Leuchte nach einem der Ansprüche 1 bis 5, **dadurch gekennzeichnet, dass** die Leuchtenabdeckung eine Mehrzahl zusammengesetzter einzelner Prismenelemente (40; 50; 60; 70) umfasst, welche jeweils eine Prismenstruktur aufweisen.

7. Leuchte nach Anspruch 6 oder 7, **dadurch gekennzeichnet, dass** die Leuchtenabdeckung (14), insbesondere die Prismenstruktur (20; 40; 50; 60; 70), aus transparentem oder überwiegend lichtdurchlässigem Material, insbesondere aus PMMA oder aus Glas, hergestellt ist.

8. Leuchte nach einem der Ansprüche 1 bis 8, **dadurch gekennzeichnet, dass** das optische System der Leuchte ausschließlich aus der Leuchtenabdeckung (14) besteht.

9. Innenraumleuchte, insbesondere Deckenleuchte (10) umfassend ein flaches, kastenförmiges Leuchtengehäuse (12) eine großflächige OLED (30), insbesondere mit mindestens 100cm² Grundfläche, sowie eine Leuchtenabdeckung (14) gemäß dem Kennzeichen aus Anspruch 1.

10. Optisches System für eine Leuchte (10) mit mindestens einem diffus abstrahlenden, flächigen Leuchtmittel, insbesondere mit einer OLED (30), **dadurch gekennzeichnet, dass** das optische System zur Erzielung einer gewünschten Richtcharakteristik eine Leuchtenabdeckung (14) umfasst, welche abstrahlseitig mindestens eine Prismenstruktur (20; 40; 50; 60; 70) zur Lichtlenkung umfasst.

11. Leuchtenabdeckung (14) aus lichtdurchlässigem Material, wobei die Leuchtenabdeckung (14) flächig ausgeführt ist, **gekennzeichnet durch** mindestens eine abstrahlseitige Prismenstruktur (20; 40; 50; 60; 70) zur Lichtlenkung gemäß einer gewünschten Abstrahlcharakteristik.
